(19) Europäisches Patentamt
European Patent Office
Office européen des brevets

(11) Veröffentlichungsnummer: **0 055 434**
**B1**

(12) **EUROPÄISCHE PATENTSCHRIFT**

(45) Veröffentlichungstag der Patentschrift: **12.02.86**

(21) Anmeldenummer: **81110574.1**

(22) Anmeldetag: **18.12.81**

(51) Int. Cl.[4]: **C 08 G 65/32**, C 08 G 65/28, C 08 G 59/14, C 08 G 59/62, C 10 G 33/04, B 01 D 17/04

(54) **Additionsprodukte aus Polyether-Blockpolymeren und Bis-glycidylethern, Verfahren zu deren Herstellung und deren Verwendung.**

(30) Priorität: **30.12.80 DE 3049455**

(43) Veröffentlichungstag der Anmeldung: **07.07.82 Patentblatt 82/27**

(45) Bekanntmachung des Hinweises auf die Patenterteilung: **12.02.86 Patentblatt 86/07**

(84) Benannte Vertragsstaaten: **DE GB IT NL**

(56) Entgegenhaltungen:
**DE-B-1 018 179**
**US-A-3 383 326**
**US-A-3 676 501**
**US-A-4 175 054**

(73) Patentinhaber: **HOECHST AKTIENGESELLSCHAFT**
**Postfach 80 03 20**
**D-6230 Frankfurt am Main 80 (DE)**

(72) Erfinder: **Diery, Helmut, Dr.**
**Theresenstrasse 45**
**D-6233 Kelkheim (Taunus) (DE)**
Erfinder: **Hille, Martin, Dr.**
**In den Eichen 46**
**D-6237 Liederbach (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 055 434 B1

**Beschreibung**

Der größte Teil des geförderten Rohöls fällt als Wasserin-Öl-Emulsion an. Nur in der Anfangsphase eines Ölfeldes wird praktisch reines Rohöl produziert. Nach einer bestimmten Zeit steigt dann der Wassergehalt im Rohöl, vornehmlich beginnend mit den am Ölfeldrand gelegenen Sonden, an. Das Wasser muß vor dem Transport abgetrennt bzw. unter eine akzeptable Konzentration abgesenkt werden. Dies erfolgt allgemein durch den Zusatz geringer Mengen an Tensiden, genannt Demulgatoren oder Emulsionsspalter, wobei die meisten Rohöle erwärmt werden. Gute Demulgatoren senken den Wassergehalt im Rohöl, den Ölgehalt im abgetrennten Wasser und den Salz- sowie Aschegehalt im Rohöl bei möglichst geringen Anwendungskonzentrationen und niedrigen Temperaturen sowie kurzer Einwirkzeit auf die geforderten Werte herab. Die Rohöle sind weltweit sehr verschieden und deshalb sind zur Erreichung optimaler Demulgierergebnisse viele Arten von Emulsionssplatern im Einsatz. Bei den anfallenden und zu verarbeitenden großen Mengen an Rohölemulsionen besteht daher eine großer Interesse an verbesserten Demulgatoren, denn schon eine geringe Absenkung der Aufbereitungstemperatur, des Salz- und Wassergehaltes im Rohöl oder des Ölgehaltes im Wasser bringt signifikante wirtschaftliche Vorteile.

Stark verbreitet ist die Demulgierung der Rohöle mit Umsetzungsprodukten von Alkylenoxiden mit Alkylphenolformaldehydharzen. Produkte dieses Typs sind beispielsweise in US—A—2 499 368, 2 499 370, 2 524 889, 2 560 333 und 2 574 543 beschrieben. Die nächst größere Gruppe von Demulgatoren sind Block- und Mischpolymerisate aus Propylen- und Ethylenoxid z.B. gemäß FR—A—1 069 615 und DE—B 1 018 179. Man erhält weiterhin effektive Demulgatoren durch die Vernetzung der Block- und Mischpolymerisate aus Propylen- und Ethylenoxid untereinander und mit oxalkylierten Alkylphenolformaldehydharzen. Als Vernetzungsmittel dienen dabei Verbindungen wie Phosphorchloride, Diisocyanate, Dicarbonsäuren und Phenolformaldehydharzkörper.

Beschreibungsergänzung

Aus der US—A—3383 326 sind bereits Addukte bekannt aus Ethylenoxid-Propylenoxid-Blockpolymeren und Bis-glycidylethern. Diese Produkte haben jedoch nur einen sehr geringen Gehalt an Ethylenoxid.

Es wurde nun gefunden, daß Additionsprodukte aus Polyether-Blockpolymerisaten und Bis-glycidylethern bessere Demulgierergebnisse als die bisher bekannten Demulgatoren erbringen.

Gegenstand der Erfindung sind somit Additionsprodukte aus 1 Mol eines Polyether-Blockpolymers der Formel

$$HO(CH_2CH_2O)_m—(\underset{\underset{R}{|}}{CH_2CHO})_p—(CH_2CH_2O)_nH \qquad (1)$$

worin R Methyl und/oder Ethyl bedeutet, n und m Zahlen sind, die so gewählt sind, daß der Polyethylenoxidanteil 20 bis 80% des Molekulargewichts des Gesamtmoleküls beträgt und p ist eine Zahl größer als 10 sowie 0,6 bis 1 Mol eines Bis-glycidylethers der Formel

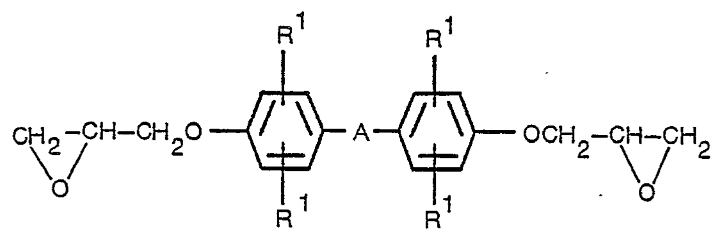

oder

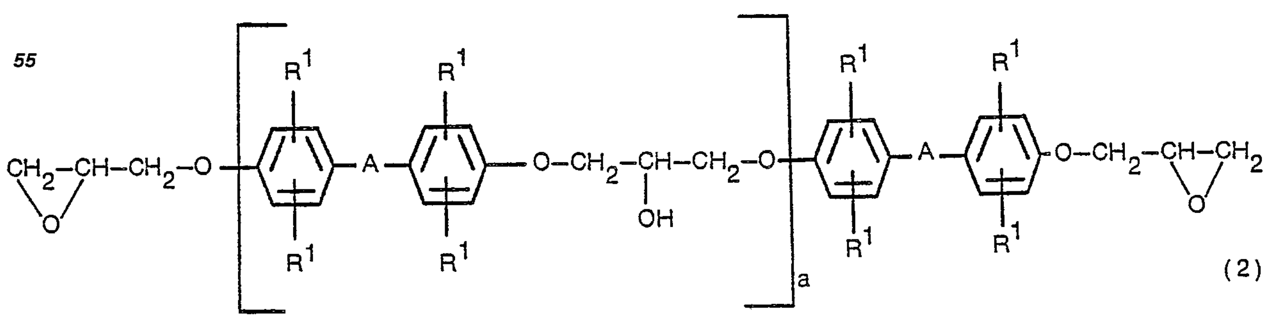

(2)

worin $R^1$ gleich oder verschieden sein können und Wasserstoff $C_1$—$C_4$ -Alkyl oder Halogen, insbesondere Chlor, A eine direkte Bindung, eine Sulfonyl- oder Cyclohexylgruppe oder eine Gruppe der Formel

$$R^1—\overset{|}{\underset{|}{C}}—R^2$$

$R^2$ Wasserstoff, Methyl oder Phenyl und a eine ganze Zahl von 0 bis 10 bedeutet.

Als Polyether-Blockpolymerisate werden solche Produkte eingesetzt, die durch Oxethylierung eines Polypropylenoxids mit einem Molgewicht von mindestens 600 hergestellt werden. Vurzugsweise geht man aus von einem Polypropylenoxid mit einem Molgewicht von 1000 bis 3500. Das Propylenoxid kann auch teilweise durch Butylenoxid ersetzt werden. Der Anteil der Polyethylenoxidgruppen am Gesamtmolekül des Blockpolymers wird so gewählt, daß er 20 bis 80% ausmacht.

Die Bis-glycidylether gewinnt man in bekannter Weise aus den entsprechenden Bis-phenolen. Hierfür kommen unter anderem folgende Bis-phenole in Frage: Bis-(4-hydroxyphenyl)-methan, Bis-(4-hydroxy-3-methylphenyl)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, 1,1-Bis-(4-hydroxyphenyl)-cyclohexan, 4,4'-Dihydroxydiphenyl, 4,4'-Dihydroxydiphenylsulfon.

Darüber hinaus kommen als Bis-glycidylether auch Epoxyharze in Frage gemäß der oben angegebenen Formel.

Die Umsetzung der Polyether-Blockpolymeren mit den Bis-glycidylethern erfolgt bei Temperaturen zwischen 70 und 160°C, bevorzugt 80 bis 120°C. Die Reaktion erfolgt im allgemeinen ohne Lösungsmittel, doch ist auch möglich, die Reaktion in einem inerten organischen Lösungsmittel durchzuführen. Das Molverhältnis des Polyether Blockpolymeren zum Bisepoxid liegt bei 1:0,6 bis 1:1 wobei das Verhältnis 1:1 wegen des Auftretens von Vernetzungsreaktionen und der damit verbundenen Bildung gallenartiger Produkte nicht überschritten werden sollte. Dabei kann es zweckmäßig sein, die Gesamtmenge an Bisepoxid in zwei bis drei Anteilen im Laufe der Reaktion zuzugeben. Die Reaktion erfolgt in Gegenwart eines alkalisch reagierenden Katalysators oder einer Lewis-Säure. Wenn das Blockpolymere noch den bei seiner Herstellung benötigten alkalischen Katalysator, z.B. Natriumhydroxid, Kaliumhydroxid oder Natriummethylat in Form des neutralisierten Salzes enthält, wirkt dieses Salz bei der Umsetzung mit dem Bisepoxid als Katalysator. Eine erneute Zugabe eines Katalysators erübrigt sich dann. Wurde das Blockpolymer nach seiner Herstellung vom Katalysator befreit, ist die erneute Zugabe eines Katalysators vom genannten Typ notwendig. Die Dauer der Reaktion hängt ab von der Reaktionstemperatur. Die Umsetzung wird solange durchgeführt, bis eine Epoxid-Zahl von kleiner als 1 bis 2 erreicht ist.

Die so erhaltenen Produkte eignen sich sehr gut zum Spalten von Emulsionen aus Wasser und Erdöl. Man setzt diese Produkte den Rohölemulsionen in Konzentrationen von 2 bis 400, vorzugsweise 5 bis 50 ppm zu entweder in unverdünnter Form oder als Lösungen, die im Verhältnis bis 1:200 mit einem organischen Lösungsmittel verdünnt wurden.

Die folgenden Beispiele sollen die Erfindung erläutern, wobei "ti" in allen Fällen "Innentemperatur" bedeutet.

### Beispiel 1

2953 Gewichtsteile eines Ethylenoxid/Propylenoxid-Blockpolymerisats mit einem Polypropylenoxid-Block vom Molekulargewicht ca. 1800 und 40% Polyethylenoxid im Gesamtmolekül mit dem Handelsnamen Genapol PF 40(R) (mittleres Molekulargewicht 2953 aus der OH-Zahl berechnet) werden in einem 2 1-Rührgefäß mit Ankerrührer und Innenthermometer vorgelegt. Dann wird der Bisglycidylether von Bisphenol A (mit der Epoxidzahl 197) in einer Menge von 222,3 Gewichtsteilen zugesetzt und die Mischung 1/2 Stunde bei Raumtemperatur gerührt. Anschließend wird erwärmt und das Reaktionsgemisch bei ti = 110°C 4 Stunden langsam gerührt. Dann werden nochmals, 92,6 Gewichtsteile des Bisglycidylethers zugesetzt und weitere 3 Stunden bei 110°C gerührt. Nach der Zugabe einer dritten Menge von 18,5 Gewichtsteilen des Bisglycidylethers und weiterem Rühren über 2 Stunden bei derselben Temperatur ist die Epoxidzahl der Mischung auf 1 zurückgegangen. Das Reaktionsprodukt stellt eine gut gießbare braune Flüssigkeit mit einem Trübungspunkt 60—62°C dar (in Butyldiglykol/Wasser nach DIN 53917).

### Beispiel 2

In einem zylindrischen 1 Liter Gefäß mit Ankerrührer, Innenthermometer und Kühler mit $CaCl_2$-Feuchtigkeitsabschluß werden 561 Gewichtsteile eines Ethylenoxid/Propylenoxid-Blockpolymerisats wie in Beispiel 1 (Genapol. PF 40(R)) (mittleres Molekulargewicht 2805 aus der OH-Zahl = 40 berechnet) und 45,1 Gewichtsteile eines Bisglycidylethers von Bisphenol A (Mol 376 ber. aus Epoxidzahl) vorgelegt. Nach 1/2-stündigem Rühren bei Raumtemperatur wird auf ti = 80°C erwärmt. Nach 8 Stunden wird ein zweiter Anteil von 18,8 Gewichtsteilen des Bisglycidylethers zugegeben, weitere 8 Stunden bei ti = 80°C gerührt sowie anschließend noch 8 Stunden bei ti = 110°C. Die Gesamtreaktionszeit beträgt 24 Stunden. Die Epoxidzahl

der Mischung geht dabei auf <1—2 zurück. Trübungspunkt 64—65°C (in Butyldiglykol/Wasser nach DIN 53917).

Beispiel 3

a) In einem 2 Liter Gefäß mit Ankerrührer und Innenthermometer werden 623,2 Gewichtsteile eines Blockpolymerisats mit einem Polypropylenoxid-Block vom Molgewicht 1750 und 40% Polyethylenoxid im Gesamtmolekül (Handelsname Pluriol PE 6400(R), mit dem Molgewicht 3116 aus der OH-Zahl berechnet) mit 0,208 Gewichtsteilen $BF_3$-Etherat versetzt und 15 Minuten bei Raumtemperatur verrührt. Anschließend werden 67,9 Gewichtsteile des Bisglycidylethers von Bisphenol A (Mol 376) zugesetzt und 10 Stunden bei 120°C gerührt. Man erhält eine gelbe, klare mittelviskose Flüssigkeit, deren Epoxidzahl bei 1 liegt. Trübungspunkt nach DIN 53917 = 41°C.

b) Wird die Umsetzung mit 8,2 Gewichtsteilen Natrium-Stearat anstelle des Borfluorids-Etherats unter 15 stündigem Rühren bei 140°C durchgeführt, so erhält man ein trübes, rötlichbraunes Reaktionsprodukt, das unter Zusatz von 10 Gewichtsteilen Celite(R) heiß zu einer klaren Flüssigkeit filtriert werden kann. Trübungspunkt nach DIN 53917 = 61°C, Epoxidzahl kleiner 1.

Beispiel 4

Wird im Beispiel 3a der Bisglycidylether von Bisphenol A durch 336,8 Gewichtsteile eines Epoxidharzes (Formel 2 a = 5—6, mit der Epoxidzahl 39) ersetzt und 28 Stunden bei 120°C gerührt, so wird eine Epoxidzahl von 4—5 erreicht. Bei nochmaligem Zusatz von 0,2 Gewichtsteilen Borfluorid-Etherat und weiterer Umsetzung bei 120°C über acht Stunden geht die Epoxidzahl auf weniger als 1 zurück. Man erhält eine gelbe, hochviskose Flüssigkeit.

Trübungspunkt nach DIN 53917 = 45°C.

Beispiel 5

Bei Ersatz des Epoxidharzes von Beispiel 4 durch 168,4 Gewichtsteile eines Epoxidharzes mit der Epoxidzahl 77/78 (Formel 2 a = 2,4), wobei 28 Stunden bei 120°C unter Zusatz von 0,2 Gewichtsteilen Borfluorid-Etherat gerührt wird, erhält man eine blanke, gelbstichige, hochviskose Flüssigkeit. Trübungspunkt nach DIN 53917 = 45°C.

Beispiel 6

a) In einem 2 Liter Gefäß wie in Beispiel 2 ausgerüstet werden 975,6 Gewichtsteile eines Ethylenoxid/Propylenoxid-Blockpolymerisates mit einem Polypropylenoxid-Block vom Molekulargewicht ca. 1600 und 20% Polyethylenoxid im Gesamtmolekül (Handelsname Genapol PF 20(R)) und 89,3 Gewichtsteile des Bisglycidylethers von Bisphenol A (Epoxidzahl 196) 8 Stunden bei 80°C gerührt. Es werden weitere 37,2 Gewichtsteile des Bisglycidylethers zugegeben und noch 8 Stunden bei 80°C und 8 Stunden bei 110°C umgesetzt. Das flüssige Reaktionsprodukt hat eine Epoxid-zahl von weniger als 1.

Trübungspunkt nach DIN 53917 = 51°C.

b) Das in Beispiel 6a verwendete Blockpolymerisat wird durch 2301,6 Gewichtsteile eines Ethylenoxid/Propylenoxid-Blockpolymerisats mit 80% Polyethylenoxid im Gesamtmolekül (Handelsname Genapol PF 80(R), OH-Zahl 19/20) ersetzt. Die Reaktionszeit bei 110°C wird hierbei auf 18 Stunden verlängert. Das weiße wachsartige Reaktionsprodukt hat eine Epoxidzahl von ca 1.

Trübungspunkt nach DIN 53917 = 90°C.

Die gemäß den Beispielen 1 bis 6b erhaltenen Produkte wurden auf ihre Demulgierwirkung bei verschiedenen Erdölen geprüft. Die Ergebnisse sind in den folgenden Tabellen 1 bis 3 zusammengestellt.

Bei den Versuchen wurden die verschiedenen Demulgatoren 50%ig in Methanol gelöst angewandt, d.h. die Zugabe zu den Emulsionen erfolgt mit Mikrodosiereinrichtungen. In den Tabellen werden die nach bestimmten Zeiten abgeschiedenen Wassermengen in Prozent angegeben. Der absolute Wassergehalt wurde nach Dean Rusk bestimmt. Die jeweils angewandte Menge der 50%igen methanolischen Lösung der Demulgatoren, die Demulgiertemperatur, der absolute Wassergehalt der Emulsionen und deren Ursprung sind in den einzelnen Tabellen angegeben.

TABELLE 1

Demulgiertemperatur: 45°C
Wassergehalt der Emulsion: 63%
Dosiermenge: 35 ppm
Ursprung: Emsland (BRD)

| Beispiel | Minuten: | 15 | 30 | 45 | 60 | 100 | 200 |
|---|---|---|---|---|---|---|---|
| 1 | | 27 | 53 | 77 | 98 | 100 | 100 |
| 2 | | 22 | 50 | 78 | 100 | 100 | 100 |
| 3 a) | | 14 | 44 | 63 | 81 | 98 | 100 |
| 3 b) | | 19 | 48 | 69 | 86 | 99 | 100 |
| 4 | | 12 | 38 | 59 | 77 | 96 | 100 |
| 5 | | 13 | 37 | 56 | 75 | 94 | 100 |
| 6 a) | | 20 | 48 | 68 | 96 | 100 | 100 |
| 6 b) | | 2 | 32 | 48 | 66 | 84 | 96 |

TABELLE 2

Demulgiertemperatur: 32°C
Wassergehalt der Emulsion: 42%
Dosiermenge: 20 ppm
Ursprung: Kuweit

| Beispiel | Minuten: | 15 | 30 | 45 | 60 | 100 | 200 |
|---|---|---|---|---|---|---|---|
| 1 | | 18 | 47 | 77 | 96 | 100 | 100 |
| 2 | | 16 | 42 | 73 | 92 | 98 | 100 |
| 3 a | | 8 | 32 | 62 | 84 | 96 | 98 |
| 3 b) | | 15 | 36 | 67 | 88 | 95 | 100 |
| 4 | | 16 | 35 | 63 | 86 | 96 | 100 |
| 5 | | 12 | 38 | 72 | 87 | 92 | 99 |
| 6 a) | | 20 | 49 | 78 | 93 | 97 | 100 |
| 6 b) | | 8 | 22 | 38 | 67 | 84 | 96 |

TABELLE 3

Demulgiertemperatur: 30°C
Wassergehalt der Emulsion: 48%
Dosiermenge: 40 ppm
Ursprung: Libyen

| Beispiel | Minuten: | 15 | 30 | 45 | 60 | 100 | 200 |
|---|---|---|---|---|---|---|---|
| 1 | | 18 | 46 | 88 | 100 | 100 | 100 |
| 2 | | 22 | 48 | 82 | 96 | 100 | 100 |
| 3 a) | | 10 | 30 | 62 | 74 | 88 | 98 |
| 3 b) | | 12 | 38 | 76 | 92 | 98 | 100 |
| 4 | | 8 | 34 | 65 | 77 | 90 | 100 |
| 5 | | 5 | 28 | 58 | 76 | 88 | 96 |
| 6 a) | | 15 | 42 | 79 | 94 | 98 | 100 |
| 6 b) | | 5 | 28 | 54 | 72 | 86 | 95 |

**Patentansprüche**

1. Additionsprodukte aus 1 Mol eines Polyether-Blockpolymers der Formel

$$HO(CH_2CH_2O)_m-(CH_2\underset{\substack{|\\ R}}{C}HO)_p-(CH_2CH_2O)_nH \qquad (1)$$

worin R Methyl und/oder Ethyl bedeutet, n und m Zahlen sind, die so gewählt sind, daß der Polyethylenoxidanteil 20 bis 80% des Molekulargewichts des Gesamtmoleküls beträgt und p ist eine Zahl größer als 10 sowie 0,6 bis 1 Mol eines Bisglycidylethers der Formel

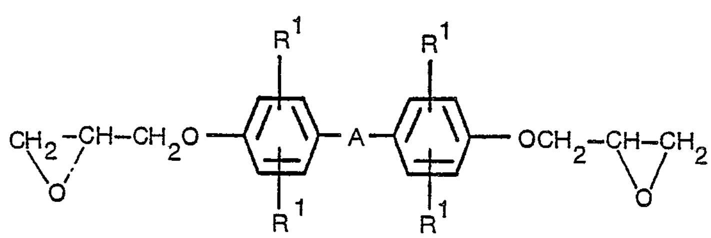

oder

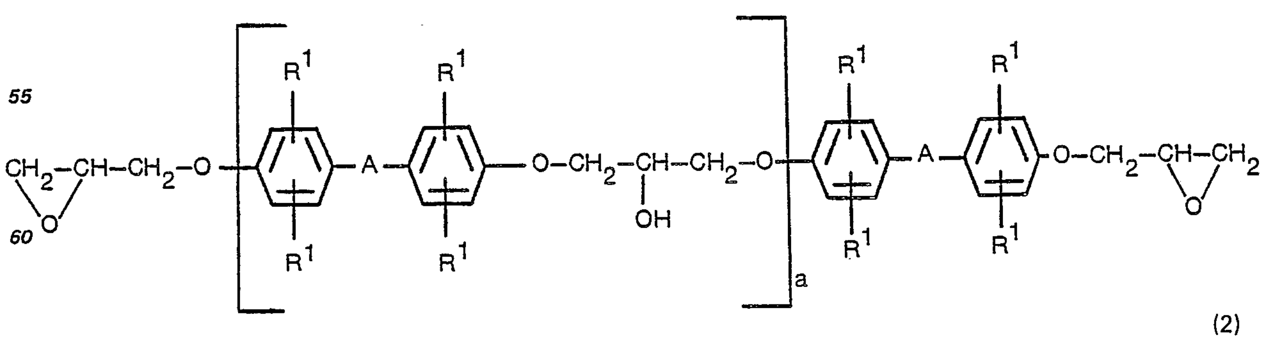

(2)

worin $R^1$ gleich oder verschieden sein können und Wasserstoff $C_1$—$C_4$ -Alkyl oder Halogen, insbesondere Chlor, A eine direkte Bindung, eine Sulfonyl- oder Cyclohexylgruppe oder eine Gruppe der Formel

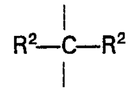

$R^2$ Wasserstoff, Methyl oder Phenyl und a eine ganze Zahl von 0 bis 10 bedeutet.

2. Verfahren zur Herstellung der Additionsprodukte nach Anspruch 1, dadurch gekennzeichnet, daß man das Polyether-Blockpolymer mit dem Bis-glycidylether bei einer Temperatur von 70 bis 160°C umsetzt.

3. Verwendung der Additionsprodukte nach Anspruch 1 zum Spalten von Erdölemulsionen.

**Revendications**

1. Produits formés par addition d'une mole d'un polymère séquencé à base d'un polyéther de formule

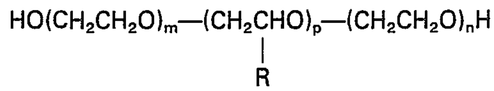

(1)

dans laquelle R désigne un groupe méthyle et/ou éthyle, n et m sont des nombres choisis de telle façon que la proportion de l'oxyde de polyéthylène va de 20 à 80% du poids de l'ensemble de la molécule et que p soit un nombre supérieur à 10, et de 0,6 à 1 mole d'un éther bisglycidylique de formule

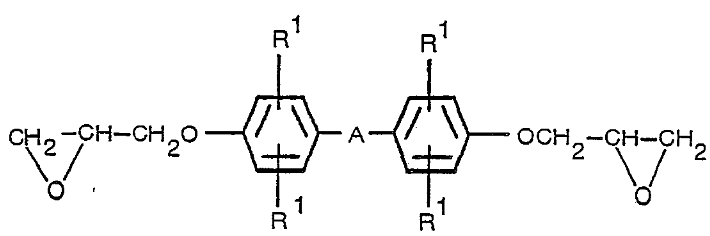

ou

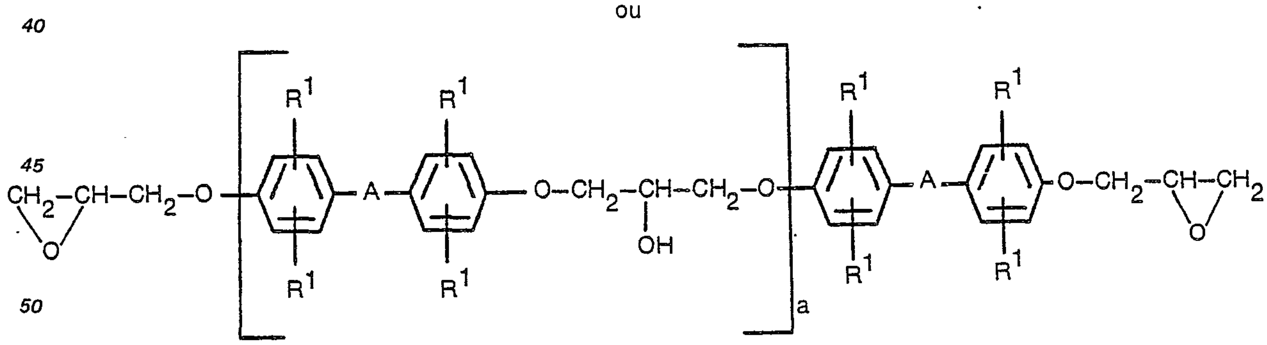

dans laquelle les $R^1$ sont identiques ou différents et représentent l'hydrogène, un groupe alkyle en $C_1$—$C_4$ ou un halogène, en particulier le chlore, A désigne une liaison directe, un groupe sulfonyle ou cyclohexyle ou un groupe de formule

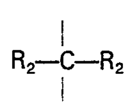

dans laquelle $R_2$ désigne l'hydrogène, un groupe méthyle ou phényle et a représente un nombre entier de 0 à 10.

2. Procédé de préparation des produits d'addition selon la revendication 1, caractérisé en ce qu'on fait

réagir le polymère séquencé à base d'un polyéther avec l'éther bisglycidylique à une température de 70 à 160°C.

3. Utilisation des produits d'addition selon la revendication 1 pour la démulsification d'émulsions de pétrole.

**Claims**

1. An addition product from 1 mole of a polyether block polymer of the formula

$$HO(CH_2CH_2O)_m-(CH_2\underset{\underset{R}{|}}{C}HO)_p-(CH_2CH_2O)_nH$$

wherein R denotes methyl and/or ethyl, n and m are numbers which are so chosen that the content of polyethylene oxide constitutes 20 to 80% of the molecular weight of the total molecule and p is a number larger than 10, and 0,6 to 1 mole of a bis-glycidyl ether of the formula

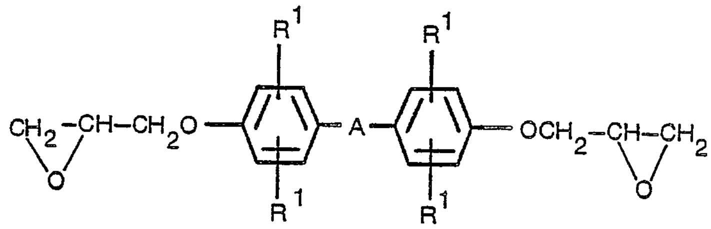

or

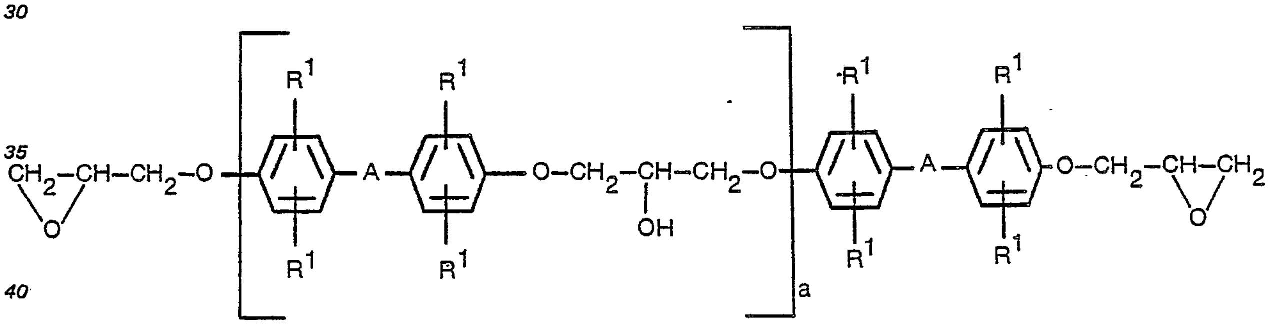

wherein the $R^1$'s can be identical or different and denote hydrogen, $C_1$—$C_4$-alkyl or halogen, in particular chlorine, A denotes a direct bond, a sulfonyl or cyclohexyl group or a group of the formula

$$R^2-\overset{|}{\underset{|}{C}}-R^2$$

$R^2$ denotes hydrogen, methyl or phenyl and a denotes an integer from 0 to 10.

2. A process for the preparation of addition products as claimed in claim 1, which comprises reacting the polyether block polymer with the bis-glycidyl ether at a temperature of 70 to 160°C.

3. Method of use of the addition products as claimed in claim 1 for breaking petroleum emulsions.